# EUROPÄISCHE PATENTSCHRIFT

(11) **EP 1 176 044 B1**
(45) Veröffentlichungstag und Bekanntmachung des Hinweises auf die Patenterteilung: **02.07.2003**
(21) Anmeldenummer: 01117918.1
(22) Anmeldetag: 24.07.2001
(51) Int. Cl.: B60J 10/12, B60J 7/00, B29C 44/12

(54) **Verbundbauteil für Fahrzeugkarosserien sowie Verfahren und Vorrichtung für dessen Herstellung**
Composite member for vehicle bodies as well as a method and apparatus for the production thereof
Elément composite pour carrosseries de véhicule, ainsi que procédé et dispositif pour sa fabrication

(30) Priorität: 28.07.2000 DE 10036816
(43) Veröffentlichungstag der Anmeldung: 30.01.2002
(73) Patentinhaber: ArvinMeritor GmbH, 63128 Dietzenbach (DE)
(72) Erfinder: Grimm, Rainer, 60599 Frankfurt (DE); Böhm, Horst, 60599 Frankfurt (DE)
(74) Vertreter: Oppermann, Mark, Dipl.-Ing.

(56) Entgegenhaltungen:
- DE-A- 4 326 013
- DE-A- 19 630 177
- DE-C- 19 923 725
- US-A- 5 409 290

## Beschreibung

Die vorliegende Erfindung bezieht sich auf ein Verbundbauteil für Fahrzeugkarosserien gemäß dem Oberbegriff des Patentanspruchs 1, sowie auf ein Verfahren gemäß dem Oberbegriff des Patentanspruchs 11 und eine Vorrichtung gemäß dem Oberbegriff des Patentanspruchs 13, für die Herstellung eines solchen Verbundbauteils. Insbesondere bezieht sich die Erfindung auf Glasdeckel für Schiebedächer, wie sie massenweise im Automobilbau zum Einsatz kommen. Ein Verbundbauteil dieser Art ist in DE 19630177A offenbart.

Erfindungsgemäß ausgebildete Verbundbauteile sind grundsätzlich für alle äußeren und inneren platten- bzw. scheibenförmigen Strukturen von Fahrzeugkarosserien, seien sie transparent oder undurchsichtig, einschließlich der Hauben, Türen und Klappen / Deckel, geeignet. Wenn nachfolgend durchweg von Fahrzeugdächern und Fahrzeugdachteilen die Rede ist, handelt es sich zwar um den bevorzugten Anwendungsort der Erfindung, jedoch ohne darauf beschränkende Bedeutung. Ferner soll die verwendete Bezeichnung "Schiebedach" nicht nur solche Konstruktionen einschließen, bei denen der Deckel nach Absenken seiner Hinterkante zur Freigabe der Dachöffnung unter die hintere feste Dachfläche verschiebbar ist, sondern auch Schiebehebedächer, bei denen mindestens einer der Deckel außerdem ausgehend von seiner Schließstellung um eine in der Nähe seiner Vorderkante vorgesehene Schwenkachse zur Ausstellung über die feste Dachfläche verschwenkt werden kann. Auch vorn scharnierte lüftungsklappenähnlich ausstellbare Deckel und sogenannte Oberfirstschiebedächer, bei denen der Deckel nach Anheben seiner Hinterkante teilweise zur Freigabe der Dachöffnung über die hintere feste Dachfläche verschiebbar ist, sollen eingeschlossen sein.

Solche Verbundbauteile bedürfen in der Regel der Abdichtung gegenüber angrenzenden Karosseriebauteilen oder anderen Deckeln.

Bei einer solchen Abdichtung kann es sich um eine nach Anbringung des betreffenden Verbundbauteils ständige Abdichtung gegenüber einem angrenzenden Karosseriebauteil, beispielsweise der Randabdichtung eines vorgefertigten Dachmoduls gegenüber dem Dachrahmen einer Fahrzeugkarosserie, oder um eine zeitweilige Abdichtung des Verbundbauteils gegenüber dem angrenzenden Karosseriebauteil handeln, wie sie beispielsweise zwischen dem Deckel und den Dachöffnungsrändern einer Schiebedachkonstruktion eines Fahrzeugs gegeben ist.

Abdichtungsanordnungen der in Rede stehenden Ausführungen sind in der Regel an den Rändern oder in Randnähe der Verbundbauteile vorgesehen, um zu verhindern, daß Feuchtigkeit und/oder Verunreinigungen in die Spalträume zwischen benachbarten Karosseriebauteilen eindringen. Zu diesem Zweck werden nach dem Stand der Technik gummielastische Dichtungsprofile auf Vorsprünge oder Ränder des Verbundbauteils aufgesteckt (FR-A-2 529 844, DE-C-44 22 176) oder in am Verbundbauteil vorgesehene Nuten eingesteckt (DE-C-196 37 793), um sich bei Anbringung des Verbundbauteils dicht an das angrenzende Karosseriebauteil anzulegen. Bei anderen bekannten Ausführungen sind im Verbundbauteil Nuten vorgesehen, welche der Aufnahme eines Kleberwulstes dienen, der das Verbundbauteil abgedichtet am angrenzenden Karosseriebauteil befestigt (DE-C-32 02 594). Weiterhin sind auch noch Anordnungen vorgeschlagen worden, bei denen zwischen Verbundbauteil und Karosseriebauteil bei der Montage Dichtungen eingelegt werden (DE-A-29 29 915, DE-U-79 29 367). Allen diesen Anordnungen ist die Notwendigkeit gemeinsam, die erforderlichen Abdichtungen / Dichtungsprofile nach Fertigstellung des Verbundbauteils in aufwendiger Weise in zusätzlichen Arbeitsschritten vor der Montage an der Fahrzeugkarosserie anzubringen.

Deshalb wurde schon in der älteren DE-A-199 46 008 derselben Anmelderin ein Verbundbauteil für Fahrzeugkarosserien vorgeschlagen, welches eine starre Schicht und eine der Innenseite der starren Schicht aufgeschäumte Kunststoffschicht aufweist, wobei an den Rand der Kunststoffschicht eine Dichtung angeschäumt ist. Im Ergebnis ist nach dem Aufschäumen der Kunststoffschicht auf der Innenseite der starren Schicht das Verbundbauteil bereits mit einer integrierten Dichtung versehen, die das Verbundbauteil gegenüber angrenzenden Karosseriebauteilen abdichtet. Die Ausformung eines Aufsteckrandes oder -vorsprungs an dem Verbundbauteil sowie das Aufstecken einer zusätzlichen, zunächst getrennt bereitzustellenden Dichtung auf das fertige Verbundbauteil entfallen daher in vorteilhafter Weise, wodurch eine kostengünstige Fertigung eines einbaufertigen Verbundbauteils ermöglicht wird. Entsprechendes gilt für die aus der DE-A-43 26 013 bekanntgewordene Konstruktion.

Schließlich offenbart die gattungsbildende DE-A-196 30 177 einen starren Deckel zum Verschließen einer Öffnung in der Karosserie eines Fahrzeugs. Der Deckel hat einen flächigen Grundkörper, vornehmlich aus lichtdurchlässigem Material, an dessen Randbereich ein Kunststoffrahmen vorgesehen ist. Am Deckel ist ferner eine umlaufende Dichtung zum Abdichten eines Spalts zwischen dem Deckel und der Karosserie angebracht. Die Dichtung weist einen Dichtabschnitt und einen Befestigungsabschnitt auf, von denen letzterer zwischen Grundkörper und Kunststoffrahmen eingefügt ist. Eine elastische Verformung des Befestigungsabschnitts zwischen Grundkörper und Kunststoffrahmen ist diesem Stand der Technik nicht zu entnehmen.

Weitere Probleme, welche bei den oben beschriebenen bekannten Ausbildungen aufgetreten sind, ergeben sich daraus, daß die am Verbundbauteil auf- oder eingesteckten Dichtungen infolge unvermeidbarer Toleranzen über das Verbundbauteil hinaus zum Äußeren der Karosserie vorstehen können. Dieser Dichtungsüberstand führt zum einen dazu, daß an den durch die Dichtung begrenzten Karosserieflächen z.B. Regenwasser stehen bleiben kann; verdunstet dieses Wasser, bleibt hier eine unerwünschte Dreckschicht auf der Karosserie zurück. Zum anderen bildet die überstehende Dichtung an der Karosserie eine unerwünschte geräuschgenerierende Kante aus. Abhilfe konnte hier bisher nur ein aufwendiges Ab- bzw. Bündigschleifen der Dichtung nach Montage am Verbundbauteil schaffen.

Der vorliegenden Erfindung liegt die Aufgabe zugrunde, ein Verbundbauteil zu schaffen, bei welchem eine definierte, insbesondere bündige Relativlage zwischen flächigem Grundkörper und Dichtung auf einfache Weise gewährleistet werden kann, sowie ein Verfahren und eine Vorrichtung für eine einfache Herstellung eines solchen Verbundbauteils anzugeben.

Diese Aufgabe wird durch die in den Patentansprüchen 1, 11 bzw. 13 angegebenen Merkmale gelöst. Vorteilhafte bzw. zweckmäßige Weiterbildungen der Erfindung sind Gegenstand der Patentansprüche 2 bis 10, 12 und 14.

Erfindungsgemäß ist bei einem Verbundbauteil zum Verschließen einer Öffnung in der Karosserie eines Fahrzeugs, insbesondere Glasdeckel für ein Schiebedach, welches Verbundbauteil einen flächigen Grundkörper, vorzugsweise eine Glas- oder Kunststoffscheibe, und eine einen Dichtabschnitt und einen Befestigungsabschnitt aufweisende Dichtung zum Abdichten eines Spalts zwischen dem Verbundbauteil und der Karosserie hat, die Dichtung mittels eines Kunststoffschaums an den Grundkörper angeschäumt, wobei der Befestigungsabschnitt der Dichtung unter elastischer Verformung durch den Kunststoffschaum an die Innenfläche des Grundkörpers angedrückt ist, so daß der Dichtabschnitt der Dichtung mit der Außenfläche des Grundkörpers im wesentlichen bündig abschließt.

Das erfindungsgemäße Verfahren für die Herstellung des Verbundbauteils sieht folgende Schritte vor:
Einlegen des Grundkörpers und der Dichtung in ein Schäumwerkzeug,
Halten des Dichtabschnitts der Dichtung in im wesentlichen bündigem Abschluß mit der Außenfläche des Grundkörpers,
Andrücken, unter elastischer Verformung, des Befestigungsabschnitts der Dichtung an die Innenfläche des Grundkörpers,
Anschäumen der Dichtung an den Grundkörper bzw. Hinterschäumen des Befestigungsabschnitts der Dichtung mittels des Kunststoffschaums und Ausformen des Verbundbauteils aus dem Schäumwerkzeug.

Die erfindungsgemäße Vorrichtung zur Durchführung dieses Verfahrens weist schließlich ein Schäumwerkzeug auf, welches zur Aufnahme des Grundkörper und der Dichtung zwei Formhälften hat, wobei die dem Kunststoffschaum eine Form gebende Formhälfte im Bereich der Dichtung einen Vorsprung hat, der bei geschlossenem Schäumwerkzeug den Befestigungsabschnitt der Dichtung unter elastischer Verformung genen die Innenfläche des Grundkörpers drückt, während die andere Formhälfte im Bereich der Dichtung einen Halteabschnitt aufweist, der bei geschlossenem Schäumwerkzeug den Dichtabschnitt der Dichtung in im wesentlichen bündigem Abschluß mit der Außenfläche des Grundkörpers hält.

Im Ergebnis findet auf vorteilhaft einfache Weise durch elastisches Andrücken des Befestigungsabschnitts der Dichtung an die Innenfläche des Grundkörpers, welches mit einer entsprechenden elastischen Verformung des Befestigungsabschnitts einhergeht, ein Toleranzausgleich zwischen den beteiligten Teilen statt, so daß stets für einen genauen und im wesentlichen bündigen äußeren Abschluß zwischen Grundkörper und Dichtung gesorgt ist ("flush"), ohne daß hierfür aufwendige zusätzliche Arbeitsschritte durchzuführen wären. Somit wird bei der Herstellung des Verbundbauteils in vorteilhafter Weise mit einem Arbeitsgang (sogenanntes "one-shot-system") nicht nur die Dichtung an dem Grundkörper durch Hinterschäumen befestigt, sondern gleichzeitig auch eine definierte Relativlage zwischen Grundkörper und Dichtung erzielt.

Der durch die Anordnung entsprechend dem Patentanspruch 2 bewirkte unmittelbare Anschluß der Dichtung an den Grundkörper ist nicht nur von der Optik her befriedigend. Diese Anordnung benötigt auch nur einen sehr geringen Bauraum, was bei einem Glasdeckel eines Schiebedachs in vorteilhafter Weise nicht nur zu einer Vergrößerung der Durchsichtfläche beitragen kann, sondern auch zu einer Verringerung der Spaltmaße zwischen Deckel und Karosserie.

Nach der Lehre des Patentanspruchs 3 kann die Dichtung ringförmig sein und im nicht am Grundkörper montierten Zustand am Innenumfang des Dichtabschnitts gemessen eine Länge aufweisen, die kürzer als die Umfangslänge des Grundkörperrands ist. Somit kann die Dichtung in einfacher Weise entsprechend dem Patentanspruch 12 unter elastischer Dehnung am Rand des Grundkörpers vorplaziert werden bzw. auf den Rand des Grundkörpers aufgezogen werden, bevor Grundkörper und Dichtung in das Schäumwerkzeug eingelegt werden.

Der Dichtabschnitt der Dichtung kann grundsätzlich als Vollprofil aus einem Werkstoff mit entsprechenden elastischen Eigenschaften geformt sein. Schon aus Kosten- und Gewichtsgründen bevorzugt ist aber die Ausbildung nach dem Patentanspruch 4, gemäß dem der Dichtabschnitt ein Hohlkammerprofil hat.

Der Patentanspruch 5 sieht vor, daß der Befestigungsabschnitt der Dichtung auf seiner der Innenfläche des Grundkörpers zugewandten Seite mit einer Mehrzahl von Erhebungen, z.B. in der Form von umlaufenden Rippen, versehen ist, die an der Innenfläche des Grundkörpers anliegen. Ober eine geeignete Wahl einer solchen Geometrie lassen sich die für einen zuverlässigen Toleranzausgleich benötigten elastischen Eigenschaften des Befestigungsabschnitts einfach und in definierter Weise einstellen. Zugleich sorgen die Erhebungen im Schäumwerkzeug für eine örtlich erhöhte Flächenpressung zwischen dem Befestigungsabschnitt der Dichtung und dem Grundkörper und dichten somit zwischen dem Befestigungsabschnitt und dem Grundkörper zuverlässig ab, so daß an dieser Stelle der zunächst flüssige Kunststoffschaum nicht hindurchtreten kann.

Entsprechend dem Patentanspruch 6 kann der Befestigungsabschnitt der Dichtung auf seiner von der Innenfläche des Grundkörpers abgewandten Seite mit Rippen versehen sein, welche lösbar mit durch Anschäumen gebildeten, hinterschnittenen Vertiefungen in dem Kunststoffschaum formschlüssig eingreifen. Durch die Ausgestaltung des Befestigungsabschnitts nach der Art eines sogenannten "Tannenbaumprofils" wird hier eine gute Sicherung der Dichtung gegen unbeabsichtigtes Herausziehen aus dem ausgehärteten Kunststoffschaum erzielt.

Nach der Lehre des Patentanspruchs 7 kann die Dichtung zweckmäßig eine Mehrzahl von über den Umfang verteilten, metallischen Gerüstelementen aufweisen, welche einen am Rand des Grundkörpers anliegenden Teilabschnitt des Dichtabschnitts sowie den Befestigungsabschnitt der Dichtung aussteifen. Diese Gerüstelemente können auf herstellungstechnisch günstige Weise bereits beim Extrudieren der Dichtung mit in die Dichtung eingebracht werden, wobei die Gerüstelemente zunächst z.B. in symmetrischer Anordnung mittels eines Mittelstegs verbunden in der Form eines Gerüstbandes mit durch den Extruderspalt laufen, bevor der verbindende Mittelsteg zur Ausbildung von zwei ausgesteiften, aber dennoch in Längsrichtung dehnbaren Dichtungsstreifen weggebrochen bzw. -geschnitten wird. Längt man einen solchen Dichtungsstreifen ab und verklebt oder verschweißt seine Enden, entsteht eine armierte ringförmige Dichtung, die trotzdem unter elastischer Dehnung leicht am Rand des Grundkörpers vorplaziert werden kann, bevor der Grundkörper mit der daran vorplazierten Dichtung in das Schäumwerkzeug eingelegt wird. Auch ist es möglich, ein meanderförmiges Gerüstband (sogenanntes "Meander"-Gerüstband) einzusetzen, welches in Längsrichtung verformbar ist.

Gemäß einer vorteilhaften Ausgestaltung entsprechend dem Patentanspruch 8 kann die Dichtung auch einen zwischen dem Dichtabschnitt und dem Befestigungsabschnitt vorspringenden, von den Gerüstelementen ebenfalls ausgesteiften Lippenabschnitt haben, wobei die Breite des Dichtabschnitts durch Biegen des Lippenabschnitts entsprechend der bzw. auf die Breite des Spalts zwischen dem Verbundbauteil und der Karosserie einstellbar ist.

Entsprechend dem Patentanspruch 9 kann die Dichtung beim Anschäumen an den Grundkörper in vorteilhafter Weise Abdichtelement zwischen den Formhälften des Schäumwerkzeugs sein, so daß das Schäumwerkzeug hier keine eigene, verschleißanfällige Dichtung aufweisen muß.

Der Patentanspruch 10 sieht vor, daß die Dichtung aus einem elastomeren Material wie Moosgummi oder EPDM (Ethylen-Propylen-Dien-Polymethlyen) besteht, welches beim Anschäumen mit dem Anschäummaterial, vorzugsweise PUR (Polyurethan), keine Bindung eingeht, was eine Austauschbarkeit der Dichtung ermöglicht.

Schließlich ist vorrichtungsseitig noch zu erwähnen, daß eine der Formhälften des Schäumwerkzeugs entsprechend dem Patentanspruch 14 im Bereich der Dichtung vorteilhaft eine Schräge aufweisen kann, die den Dichtabschnitt der Dichtung bei geschlossenem Schäumwerkzeug gegen den Rand des Grundkörpers drückt.

Im folgenden wird die Erfindung anhand eines bevorzugten Ausführungsbeispiels unter Bezugnahme auf die beigefügte Zeichnung näher erläutert. Darin zeigen:
- Fig. 1: einen abgebrochenen Schnitt durch einen Glasdeckel eines Schiebedachs mit angeschäumtem Kunststoffrand und erfindungsgemäß angeschäumter Randspaltdichtung, wobei strichpunktiert ein Abkantrand eines Dachausschnitts in der Karosserie eines Fahrzeugs eingezeichnet ist, um die Einbausituation des Glasdeckels zu veranschaulichen, und
- Fig. 2: einen abgebrochenen Schnitt durch den Glasdeckel gemäß Fig. 1 während des Aufschäumvorgangs in einem geschlossenen zweiteiligen Schäumwerkzeug.

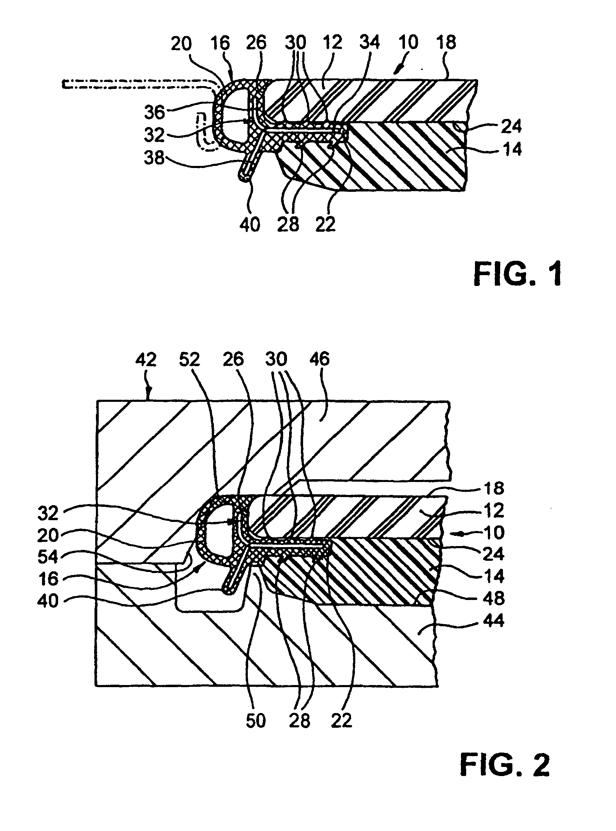

Die Fig. 1 und 2 zeigen als Verbundbauteil 10 zum Verschließen einer Öffnung in der Karosserie eines Fahrzeugs einen Glasdeckel für ein Schiebedach, mit einem flächigen Grundkörper 12 in Form einer Glas- oder Kunststoffscheibe und einer mittels eines Kunststoffschaums 14 an den Grundkörper 12 angeschäumten Dichtung 16 zum Abdichten eines Spalts zwischen dem Verbundbauteil 10 und der Karosserie (in Fig. 1 strichpunktiert angedeutet). Wie nachfolgend noch näher beschrieben werden wird, weist die in den Fig. 1 und 2 vereinfacht im unverformten Zustand dargestellte Dichtung 16 einen mit der Außenfläche 18 des Grundkörpers 12 im wesentlichen bündig abschließenden Dichtabschnitt 20 und einen Befestigungsabschnitt 22 auf, der durch den Kunststoffschaum 14 elastisch an die Innenfläche 24 des Grundkörpers 12 angedrückt ist.

Im dargestellten Ausführungsbeispiel ist die Dichtung 16 eine Hohlkammerdichtung, wobei der Dichtabschnitt 20 die Hohlkammer einschließt und der Befestigungsabschnitt 22 als Flansch ausgebildet ist, der vom Dichtabschnitt 20 absteht und damit einteilig ist. Es ist deutlich zu erkennen, daß lediglich der von dem Befestigungsabschnitt 22 gebildete Teilbereich der Dichtung 16 beim Anschäumen in dem Kunststoffschaum 14 eingebettet wird. Der Dichtabschnitt 20 der Dichtung 16 liegt dabei unmittelbar am leicht abgerundeten Rand 26 des Grundkörpers 12 an, d.h. ohne daß zwischen dem Dichtabschnitt 20 und dem Rand 26 Kunststoffschaum 14 vorhanden wäre.

In den Figuren nicht zu erkennen ist, daß die Dichtung 16 insgesamt ringförmig mit beispielsweise über dem Umfang im wesentlichen gleichbleibendem Profilquerschnitt ausgebildet ist. Hierbei weist die Dichtung 16 im nicht am Grundkörper 12 montierten Zustand am Innenumfang des Dichtabschnitts 20 gemessen eine Länge auf, die kürzer ist als die Umfangslänge des Grundkörperrands 26, so daß die Dichtung 16 im montierten Zustand unter elastischer Dehnung bzw. mit Vorspannung am Rand 26 des Grundkörpers 12 anliegt.

Die Dichtung 16 kann über ihren gesamten Querschnitt aus demselben elastomeren Material, welches den insbesondere thermischen und mechanischen Beanspruchungen in der Schäumform und im an der Karosserie des Fahrzeugs montierten Zustand hinreichend widerstehen kann, etwa Moosgummi oder EPDM, bestehen oder aber auch aus unterschiedlichen Materialien koextrudiert sein. Beispielsweise können der Dichtabschnitt 20 einerseits und der Befestigungsabschnitt 22 andererseits im Material unterschiedlich sein. Vorzugsweise ist die Dichtung 16 wenigstens im Bereich ihres Befestigungsabschnitts 22 aus einem Material geformt, das beim Ausschäumen mit dem Kunststoffschaum 14 keine Bindung eingeht, so daß die Dichtung 16 austauschbar ist.

Hierbei kann der Befestigungsabschnitt 22 der Dichtung 16 auf seiner von der Innenfläche 24 des Grundkörpers 12 abgewandten Seite mit Rippen 28 versehen sein, welche lösbar mit durch das Anschäumen gebildeten komplementären hinterschnittenen Vertiefungen im Kunststoffschaum 14 formschlüssig eingreifen. Dadurch wird der Dichtung 16 einerseits im Kunststoffschaum 14 ein fester Halt vermittelt, der ein unbeabsichtigtes Lösen der Dichtung 16 aus ihrer Anschäumposition verhindert. Andererseits läßt sich die Dichtung 16 jedoch mit dem dafür erforderlichen Kraftaufwand gegen den Widerstand des Formschlusses zwischen den Rippen 26 und den Vertiefungen aus dem Kunststoffschaum 14 herausziehen, wenn die Dichtung 16 ausgewechselt werden soll oder muß. Hierbei bleiben die Vertiefungen im Kunststoffschaum 14 erhalten, so daß diese bei Einführung eines komplementären Befestigungsabschnitts der neuen Dichtung wieder einen Formschluß mit den Rippen des neuen Befestigungsabschnitts eingehen können.

Auf der der Innenfläche 24 des Grundkörpers 12 zugewandten Seite ist der Befestigungsabschnitt 22 der Dichtung 16 mit einer Mehrzahl von Erhebungen 30, beispielsweise umlaufenden Rippen bei einem extrudierten Profil, versehen, die der Innenfläche 24 des Grundkörper 12 anliegen. Neben der Materialwahl tragen diese Erhebungen 30 zum einen zu einer definierten Elastizität des Befestigungsabschnitts 22 der Dichtung 16 bei. Durch diese Elastizität des Befestigungsabschnitts 22 können beim Andrücken des Befestigungsabschnitts 22 gegen die Innenfläche 24 des Grundkörpers 12 vorhandene Toleranzen ausgeglichen werden, so daß bei entsprechend verpreßtem Befestigungsabschnitt 22 der gegenüber der Dicke des Grundkörpers 12 eher Untermaß aufweisende Dichtabschnitt 20 der Dichtung 16 stets im wesentlichen bündig mit der Außenfläche 18 des Grundkörpers 12 abschließen kann. Zum anderen dichten diese Erhebungen 30 zwischen der Innenfläche 24 des Grundkörpers 12 und dem Befestigungsabschnitt 22 der Dichtung 16 ab und verhindern so auf sichere Weise, daß zwischen diesen Teilen beim Schäumvorgang der zunächst wasserähnlich fließfähige Kunststoffschaum hindurchtreten kann.

Weiterhin ist die Dichtung 16 mit einer Mehrzahl von über den Umfang verteilten, metallischen Gerüstelementen 32 versehen, von denen jeweils eins in den Figuren dargestellt ist. Da die einzelnen Gerüstelemente 32 im hier beschriebenen Ausführungsbeispiel im fertigen Zustand der Dichtung 16 nicht metallisch miteinander verbunden sind, behindern sie eine Längs- bzw. Umfangsdehnung der Dichtung 16 nicht.

Die vollständig vom Material der Dichtung 16 umgebenen Gerüstelemente 32 haben jeweils mindestens zwei biegbare Schenkel 34, 36, im dargestellten Ausführungsbeispiel drei biegbare Schenkel 34, 36, 38, welche im Querschnitt gesehen im wesentlichen T-förmig angeordnet sind. Der längste Schenkel 34 des Gerüstelements 32 steift den Befestigungsabschnitt 22 der Dichtung 16 aus. Der sich in den Figuren vom Schenkel 34 nach oben erstreckende Schenkel 36 des Gerüstelements 32 dient der Aussteifung des am Rand 26 des Grundkörpers 12 anliegenden Teilabschnitts des Dichtabschnitts 20 und trägt mit seiner Winkellage zum Schenkel 34 dazu bei, daß der Dichtabschnitt 20 stets am Rand 26 des Grundkörpers 12 anliegt. Der sich in den Figuren vom Schenkel 34 nach unten erstreckende Schenkel 38 des Gerüstelements 32 steift schließlich einen optionalen Lippenabschnitt 40 der Dichtung 16 aus, der zwischen dem Dichtabschnitt 20 und dem Befestigungsabschnitt 22 nach unten vorspringt. Es ist ersichtlich, daß der Dichtabschnitt 20 der Dichtung 16 durch das ohne Schwierigkeiten durchzuführende Biegen des Lippenabschnitts 40 leicht zum Ausgleich etwaiger vorhandener Spaltmaßabweichungen zwischen dem Verbundbauteil 10 und der strichpunktiert angedeuteten Karosserie deformiert werden kann, bis die Dichtung 16 bei eingesetztem Verbundbauteil 10 umlaufend dicht dem Karosserierand, z.B. dem Dachöffnungsrand, anliegt.

Wie der Fig. 2 zu entnehmen ist, hat die Vorrichtung für die Herstellung des oben beschriebenen Verbundbauteils 10 ein Schäumwerkzeug 42, welches zur Aufnahme des Grundkörper 12 und der Dichtung 16 zwei Formteile bzw. -hälften 44, 46 aufweist, wobei bei dem dargestellten Ausführungsbeispiel Schäumlage und Montagelage des Verbundbauteils 10 übereinstimmen.

Die dem Kunststoffschaum 14 mittels eines entsprechend ausgebildeten Hohlraums 48 eine Form (Rand, Rahmen bzw. Schicht) gebende untere Formhälfte 44 hat im Bereich der Dichtung 16 einen Vorsprung 50, z.B. in Form einer umlaufenden, der Form des Grundkörpers 12 folgenden Rippe, der bei vorzugsweise auf mechanischen Anschlag geschlossenem Schäumwerkzeug 42 den Befestigungsabschnitt 22 der Dichtung 16 gegen die Innenfläche 24 des Grundkörpers 12 drückt.

Die andere, hier obere Formhälfte 46 des Schäumwerkzeugs 42 weist im Bereich der Dichtung 16 einen Halteabschnitt 52 auf, z.B. in Form einer umlaufenden ebenen Fläche, der bei geschlossenem Schäumwerkzeug 42 den Dichtabschnitt 20 der Dichtung 16 in im wesentlichen bündigem Abschluß mit der Außenfläche 18 des Grundkörpers 12 hält. Eine der beiden Formhälften 44, 46 des Schäumwerkzeugs 42, im dargestellten Ausführungsbeispiel ebenfalls die obere Formhälfte 46, hat weiterhin im Bereich der Dichtung 16 eine vorzugsweise umlaufende Schräge 54, die den Dichtabschnitt 20 der Dichtung 16 bei geschlossenem Schäumwerkzeug 42 zusätzlich gegen den Rand 26 des Grundkörpers 12 drückt.

Wie deutlich der Fig. 2 zu entnehmen ist, kommt der Dichtung 16 bei dem Aufschäumvorgang eine wichtige zusätzliche Aufgabe zu. Die Dichtung 16 ist nämlich bei dem Aufschäumen des Kunststoffschaums 14 zugleich Abdichtelement zwischen den Formhälften 44, 46 des Schäumwerkzeugs 42, so daß der aufschäumende Kunststoff hier nicht nur nicht aus dem Schäumwerkzeug 42 austreten kann, sondern auch die Oberfläche der Dichtung 16 oder des Grundkörpers 12 nicht benetzen bzw. verschmutzen kann.

Zur Herstellung des oben beschriebenen Verbundbauteils 10 wird die ringförmige Dichtung 16 zunächst unter elastischer Dehnung am Rand 26 des Grundkörpers 12 vorplaziert, bevor der Grundkörper 12 mit der daran vorplazierten Dichtung 16 z.B. mittels eines Roboters zentriert in die obere Formhälfte 46 des Schäumwerkzeugs 42 eingelegt wird. In der oberen Formhälfte 46 wird der Grundkörper 12 vorzugsweise mittels Vakuum an den Halteabschnitt 52 angesaugt. Sodann wird das Schäumwerkzeug 42 geschlossen, wobei die Formhälften 44, 46 miteinander zur Anlage gelangen. Im geschlossenen Zustand des Schäumwerkzeugs 42 wird der Dichtabschnitt 20 der Dichtung 16 mittels des Halteabschnitts 52 in im wesentlichen bündigem Abschluß mit der Außenfläche 18 des Grundkörpers 12 gehalten, während der Befestigungsabschnitt 22 der Dichtung 16 mittels des Vorsprungs 50 an die Innenfläche 24 des Grundkörpers 12 gedrückt wird. Gleichzeitig drückt die zentrierende Schräge 54 der oberen Formhälfte 46 den Dichtabschnitt 20 der Dichtung 16 an den Rand 26 des Grundkörpers 12. In dieser zwangsgehaltenen Position der Dichtung 16 wird der von der unteren Formhälfte 44, der Innenfläche 24 des Grundkörpers 12 und dem Befestigungsabschnitt 22 der Dichtung 16 begrenzte Hohlraum 48 des Schäumwerkzeugs 42 in an sich bekannter Weise mit dem zunächst flüssigen Kunststoff gefüllt, der im Hohlraum 48 zu dem Kunststoffschaum 14 aushärtet. Sodann wird das fertige Verbundbauteil 10 aus dem Schäumwerkzeug 42 ausgeformt, wobei sich der Dichtabschnitt 20 der Dichtung 16 wieder vom Rand 26 des Grundkörpers 12 weg entspannt, während der Befestigungsabschnitt 22 der Dichtung 16 durch den Kunststoffschaum 14 in seiner gegen die Innenfläche 24 des Grundkörpers 12 gedrückten Stellung gehalten wird, so daß der Dichtabschnitt 20 der Dichtung 16 auch im ausgeformten Zustand des Verbundbauteils 10 im wesentlichen bündig mit der Außenfläche 18 des Grundkörpers 12 abschließt.

Bei dem in den Fig. 1 und 2 exemplarisch dargestellten Verbundbauteil 10 handelt es sich um einen Glasdeckel eines Schiebedachs, dessen flächiger Grundkörper 12 durch die transparente Glas- oder Kunststoffscheibe ausgebildet ist. Gleichermaßen könnte der Grundkörper des Verbundbauteils aber auch aus einem undurchsichtigen Metallblech, z.B. aus Aluminium oder Stahl, oder einer thermoplastischen Kunststoffolie, z.B. einer zweischichtigen Koextrusionsfolie aus PMMA und PC/ASA, gebildet sein. Bei dem Grundkörper kann es sich ebenfalls um ein mit Solarzellen versehenes, flächiges Verbundbauteil zur Ausbildung eines Solardeckels handeln.

Ferner handelt es sich bei dem auf den transparenten Grundkörper 12 zur Ausbildung eines Randes oder Rahmens (bzw. auf einen anderen Grundkörper zur Ausbildung einer durchgehenden Schicht) aufgeschäumten Kunststoffschaum 14 vorzugsweise um einen PUR-Schaum, der aus einem Polyol und einem Isocyanat besteht, die beispielsweise in einem Verhältnis von 1:2 gemischt sind.

Obgleich in den Figuren nicht gezeigt, kann der aufgeschäumte Kunststoffschaum 14 schließlich mit einer darin eingebetteten Armierung bestehend aus Fasern, z.B. Glasfasern, Geweben, Gewirken, Vliesen, Gittern u.dergl., versehen sein, welche u.a. im Zusammenwirken mit dem flächigen Grundkörper 12 die Formstabilität und Festigkeit des Verbundbauteils 10 erhöht. Ebenso kann ein Versteifungsprofil bzw. -rahmen aus Metall (nicht dargestellt) im Kunststoffschaum 14 mit eingeschäumt sein.

Es wird ein Verbundbauteil zum Verschließen einer Öffnung in der Karosserie eines Fahrzeugs, insbesondere Glasdeckel für ein Schiebedach, offenbart, mit einem flächigen Grundkörper, vorzugsweise einer Glas- oder Kunststoffscheibe, und einer Dichtung zum Abdichten eines Spalts zwischen dem Verbundbauteil und der Karosserie, wobei die Dichtung einen Dichtabschnitt und einen Befestigungsabschnitt aufweist. Erfindungsgemäß ist die Dichtung mittels eines Kunststoffschaums an den Grundkörper angeschäumt, wobei der Befestigungsabschnitt unter elastischer Verformung durch den Kunststoffschaum an die Innenfläche des Grundkörpers angedrückt ist, so daß der Dichtabschnitt mit der Außenfläche des Grundkörpers im wesentlichen bündig abschließt. Im Ergebnis wird ein Verbundbauteil geschaffen, bei welchem eine definierte, insbesondere bündige Relativlage zwischen flächigem Grundkörper und Dichtung auf einfache Weise gewährleistet werden kann. Ferner wird ein Verfahren und eine Vorrichtung für eine einfache Herstellung eines solchen Verbundbauteils angegeben.

### Bezugszeichenliste

- 10: Verbundbauteil
- 12: Grundkörper
- 14: Kunststoffschaum
- 16: Dichtung
- 18: Außenfläche
- 20: Dichtabschnitt
- 22: Befestigungsabschnitt
- 24: Innenfläche
- 26: Rand
- 28: Rippe
- 30: Erhebung
- 32: Gerüstelement
- 34: Schenkel
- 36: Schenkel
- 38: Schenkel
- 40: Lippenabschnitt
- 42: Schäumwerkzeug
- 44: Formhälfte
- 46: Formhälfte
- 48: Hohlraum
- 50: Vorsprung
- 52: Halteabschnitt
- 54: Schräge

## Patentansprüche

1. Verbundbauteil (10) zum Verschließen einer Öffnung in der Karosserie eines Fahrzeugs, insbesondere Glasdeckel für ein Schiebedach, mit einem flächigen Grundkörper (12), vorzugsweise einer Glas- oder Kunststoffscheibe, und einer Dichtung (16) zum Abdichten eines Spalts zwischen dem Verbundbauteil (10) und der Karosserie, wobei die Dichtung (16) einen Dichtabschnitt (20) und einen Befestigungsabschnitt (22) aufweist, **dadurch gekennzeichnet, daß** die Dichtung (16) mittels eines Kunststoffschaums (14) an den Grundkörper (12) angeschäumt ist, wobei der Befestigungsabschnitt (22) unter elastischer Verformung durch den Kunststoffschaum (14) an die Innenfläche (24) des Grundkörpers (12) angedrückt ist, so daß der Dichtabschnitt (20) mit der Außenfläche (18) des Grundkörpers (12) im wesentlichen bündig abschließt.

2. Verbundbauteil (10) nach Anspruch 1, **dadurch gekennzeichnet, daß** der Dichtabschnitt (20) der Dichtung (16) unmittelbar am Rand (26) des Grundkörpers (12) anliegt.

3. Verbundbauteil (10) nach Anspruch 1 oder 2, **dadurch gekennzeichnet, daß** die Dichtung (16) ringförmig ist und im nicht am Grundkörper (12) montierten Zustand am Innenumfang des Dichtabschnitts (20) gemessen eine Länge aufweist, die kürzer ist als die Umfangslänge des Grundkörperrands (26).

4. Verbundbauteil (10) nach einem der vorhergehenden Ansprüche, **dadurch gekennzeichnet, daß** der Dichtabschnitt (20) der Dichtung (16) ein Hohlkammerprofil aufweist.

5. Verbundbauteil (10) nach einem der vorhergehenden Ansprüche, **dadurch gekennzeichnet, daß** der Befestigungsabschnitt (22) der Dichtung (16) auf seiner der Innenfläche (24) des Grundkörpers (12) zugewandten Seite mit einer Mehrzahl von Erhebungen (30) versehen ist, die an der Innenfläche (24) des Grundkörpers (12) anliegen.

6. Verbundbauteil (10) nach einem der vorhergehenden Ansprüche, **dadurch gekennzeichnet, daß** der Befestigungsabschnitt (22) der Dichtung (16) auf seiner von der Innenfläche (24) des Grundkörpers (12) abgewandten Seite mit Rippen (28) versehen ist, welche lösbar mit durch Anschäumen gebildeten, hinterschnittenen Vertiefungen in dem Kunststoffschaum (14) formschlüssig eingreifen.

7. Verbundbauteil (10) nach einem der vorhergehenden Ansprüche, **dadurch gekennzeichnet, daß** die Dichtung (16) eine Mehrzahl von über den Umfang verteilten, metallischen Gerüstelementen (32) aufweist, welche einen am Rand (26) des Grundkörpers (12) anliegenden Teilabschnitt des Dichtabschnitts (20) sowie den Befestigungsabschnitt (22) der Dichtung (16) aussteifen.

8. Verbundbauteil (10) nach Anspruch 7, **dadurch gekennzeichnet, daß** die Dichtung (16) einen zwischen dem Dichtabschnitt (20) und dem Befestigungsabschnitt (22) vorspringenden, von den Gerüstelementen (32) ausgesteiften Lippenabschnitt (40) aufweist, wobei die Breite des Dichtabschnitts (20) durch Biegen des Lippenabschnitts (40) entsprechend der Breite des Spalts zwischen dem Verbundbauteil (10) und der Karosserie einstellbar ist.

9. Verbundbauteil (10) nach einem der vorhergehenden Ansprüche, **dadurch gekennzeichnet, daß** die Dichtung (16) beim Anschäumen der Dichtung (16) an den Grundkörper (12) Abdichtelement zwischen den Formhälften (44, 46) des Schäumwerkzeugs (42) ist.

10. Verbundbauteil (10) nach einem der vorhergehenden Ansprüche, **dadurch gekennzeichnet, daß** die Dichtung (16) aus einem elastomeren Material wie Moosgummi oder EPDM besteht.

11. Verfahren zur Herstellung eines Verbundbauteils (10) nach einem der vorhergehenden Ansprüche, wobei das Verfahren durch folgende Schritte **gekennzeichnet** ist:
Einlegen des Grundkörpers (12) und der Dichtung (16) in ein Schäumwerkzeug (42),
Halten des Dichtabschnitts (20) der Dichtung (16) in im wesentlichen bündigem Abschluß mit der Außenfläche (18) des Grundkörpers (12),
Andrücken, unter elastischer Verformung, des Befestigungsabschnitts (22) der Dichtung (16) an die Innenfläche (24) des Grundkörpers (12),
Anschäumen der Dichtung (16) an den Grundkörper (12) mittels des Kunststoffschaums (14) und Ausformen des Verbundbauteils (10) aus dem Schäumwerkzeug (42).

12. Verfahren nach Anspruch 11, wobei die ringförmige Dichtung (16) unter elastischer Dehnung am Rand (26) des Grundkörpers (12) vorplaziert wird, bevor Grundkörper (12) und Dichtung (16) in das Schäumwerkzeug (42) eingelegt werden.

13. Vorrichtung für die Herstellung eines Verbundbauteils (10) nach einem der Ansprüche 1 bis 10 gemäß dem Verfahren nach Anspruch 11 oder 12, mit einem Schäumwerkzeug (42), welches zur Aufnahme des Grundkörper (12) und der Dichtung (16) zwei Formhälften (44, 46) aufweist, **dadurch gekennzeichnet daß**, die dem Kunststoffschaum (14) eine Form gebende Formhälfte (44) im Bereich der Dichtung (16) einen Vorsprung (50) hat, der bei geschlossenem Schäumwerkzeug (42) den Befestigungsabschnitt (22) der Dichtung (16) unter elastischer Verformung gegen die Innenfläche (24) des Grundkörpers (12) drückt, während die andere Formhälfte (46) im Bereich der Dichtung (16) einen Halteabschnitt (52) aufweist, der bei geschlossenem Schäumwerkzeug (42) den Dichtabschnitt (20) der Dichtung (16) in im wesentlichen bündigem Abschluß mit der Außenfläche (18) des Grundkörpers (12) hält.

14. Vorrichtung nach Anspruch 13, wobei eine der Formhälften (44, 46) des Schäumwerkzeugs (42) im Bereich der Dichtung (16) eine Schräge (54) aufweist, die den Dichtabschnitt (20) der Dichtung (16) bei geschlossenem Schäumwerkzeug (42) gegen den Rand (26) des Grundkörpers (12) drückt.

## Claims

1. Composite assembly unit (10) for closing an aperture in a vehicle body, in particular glass panel for a sliding roof, with a flat base body (12), preferably a glass or plastic pane, and a seal (16) for sealing a gap between the composite assembly unit and the vehicle body, the seal (16) having a sealing section (20) and a fixing section (22), **characterized in that** the seal (16) is foamed to the base body (12) by a plastic foam (14), whereby the fixing section is pressed under elastic deformation by the plastic foam (14) against the inside face (24) of the base body (12), so that the sealing section (20) terminates substantially flush with the outside face (18) of the base body (12).

2. Composite assembly unit (10) according to Claim 1, **characterized in that** the sealing section (20) of the seal (16) rests directly on the edge (26) of the base body (12).

3. Composite assembly unit (10) according to Claim 1 or 2, **characterized in that** the seal (16) is annular and, when not fitted to the base body (12), has a length on the inside of the sealing section (20) which is shorter than the peripheral length of the base body edge (26).

4. Composite assembly unit (10) according to one of the preceding Claims, **characterized in that** the sealing section (20) of the seal (16) has a hollow chamber profile.

5. Composite assembly unit (10) according to one of the preceding Claims, **characterized in that** the fixing section (22) of the seal (16) has, on its side facing the inside face (24) of the base body (12), a plurality of protrusions (30) which rest on the inside face (24) of the base body (12).

6. Composite assembly unit (10) according to one of the preceding Claims, **characterized in that** the fixing section (22) of the seal (16) is provided on its side facing away from the inside face (24) of the base body (12) with ribs (28), which detachably engaging in form-closed manner undercut depressions in the plastic foam (14) formed by applying foam.

7. Composite assembly unit (10) according to one of the preceding Claims, **characterized in that** the seal (16) has a plurality of metallic supporting elements (32) distributed over the periphery, which stiffen the part section of the sealing section (20) resting on the edge (26) of the base body (12) and the fixing section (22) of the seal (16).

8. Composite assembly unit (10) according to Claim 7, **characterized in that** the seal (16) has a lip section (40) stiffened by the supporting elements (32), protruding between the sealing section (20) and the fixing section (22), whereby the width of the sealing section (20) is adjustable to the width of the gap between the composite assembly unit (10) and the vehicle body by bending the lip section (40).

9. Composite assembly unit (10) according to one of the preceding Claims, **characterized in that** the seal (16) is the sealing element between the mould halves (44, 46) of the foam application tool (42) when foaming the seal (16) to the base body (12).

10. Composite assembly unit (10) according to one of the preceding Claims, **characterized in that** the seal (16) consists of elastomeric material such as foamed rubber or EPDM.

11. Method for producing a composite assembly unit (10) according to one of the preceding Claims, whereby the method is **characterized by** the following steps:
Placing the base body (12) and the seal (16) into the foam application tool (42),
Holding the sealing section (20) of the seal (16) mainly flush with the outside face (18) of the base body (12),
Pressing under elastic deformation of the fixing section (22) of the seal (16) to the inside face (24) of the base body (12),
Foaming the seal (16) to the base body (12) by applying the plastic foam (14) and removing the composite assembly unit (10) from the foam application tool (42).

12. Method according to Claim 11, whereby the annular seal (16) is first fitted, by elastically expanding it, on the edge (26) of the base body (12) before the base body (12) and the seal (16) are placed into the foam application tool (42).

13. Apparatus for producing a composite assembly unit (10) according to one of the Claims 1 to 10 in conformity with the method according to Claims 11 or 12, having a foam application tool (42), which for receiving the base body (12) and the seal (16) has two mould halves (44, 46), **characterized in that** the mould half (44) imparting a shape to the plastic foam (14) having a protrusion (50) in the area of the seal (16), which presses the fixing section (22) of the seal (16) under elastic deformation against the inside face (24) of the base body (12) when the foam application tool (42) is closed, and the other mould half (46) having a holding section (52) in the area of the seal (16), which holds the sealing section (20) of the seal (16) substantially flush with the outside face (18) of the base body (12) when the foam application tool (42) is closed.

14. Apparatus according to Claim 13, whereby one of the mould halves (44, 46) of the foam application tool (42) has a bevel (54) in the area of the seal (16), which presses the sealing section (20) of the seal (16) to the edge (26) of the base body (12) when the foam application tool (42) is closed.

## Revendications

1. Elément composite (10) pour fermer une ouverture dans la carrosserie d'un véhicule, en particulier recouvrement en verre pour un toit ouvrant, comportant un corps de base plat (12), de préférence une plaque de verre ou de matière plastique, et un joint d'étanchéité (16) pour l'étanchéité d'un interstice entre l'élément composite (10) et la carrosserie, le joint (16) présentant une section d'étanchéité (20) et une section de fixation (22), **caractérisé en ce que** le joint d'étanchéité (16) est rapporté par moussage sur le corps de base (12) à l'aide d'une mousse de matière plastique (14), la section de fixation (22) étant pressée par la mousse (14) contre la surface intérieure (24) du corps de base (12), moyennant une déformation élastique, de sorte que la section d'étanchéité (20) forme une surface sensiblement plane avec la surface extérieure (18) du corps de base (12).

2. Elément composite (10) selon la revendication 1, **caractérisé en ce que** la section d'étanchéité (20) du joint d'étanchéité (16) est appliquée directement contre le bord (26) du corps de base (12).

3. Elément composite (10) selon la revendication 1 ou 2, **caractérisé en ce que** le joint d'étanchéité (16) est annulaire et, quand il n'est pas monté sur le corps de base (12), présente sur la périphérie intérieure de la section d'étanchéité (20) une longueur qui est inférieure à la longueur périphérique du bord de corps de base (26).

4. Elément composite (10) selon l'une des revendications précédentes, **caractérisé en ce que** la section d'étanchéité (20) du joint d'étanchéité (16) comporte un profil de chambre creuse.

5. Elément composite (10) selon l'une des revendications précédentes, **caractérisé en ce que** la section de fixation (22) du joint d'étanchéité (16) est pourvue, sur son côté tourné vers la surface intérieure (24) du corps de base (12), de plusieurs bosses (30) qui sont appliquées contre ladite surface intérieure (24) du corps de base (12).

6. Elément composite (10) selon l'une des revendications précédentes, **caractérisé en ce que** la section de fixation (22) du joint d'étanchéité (16) est pourvue, sur son côté opposé à la surface intérieure (24) du corps de base (12), de nervures (28) qui sont en prise par complémentarité de forme et de manière amovible avec des creux formant contre-dépouilles formés dans la mousse de matière plastique (14) lors du moussage.

7. Elément composite (10) selon l'une des revendications précédentes, **caractérisé en ce que** le joint d'étanchéité (16) présente plusieurs éléments d'ossature métalliques (32), répartis sur la périphérie, qui renforcent une section partielle, appliquée contre le bord (26) du corps de base (12), de la section d'étanchéité (20) ainsi que la section de fixation (22) du joint d'étanchéité (16).

8. Elément composite (10) selon la revendication 7, **caractérisé en ce que** le joint d'étanchéité (16) comporte une section formant lèvre (40) qui fait saillie entre la section d'étanchéité (20) et la section de fixation (22) et qui est renforcée par les éléments d'ossature (32), la largeur de la section d'étanchéité (20) étant réglable grâce à un pliage de ladite section formant lèvre (40) en fonction de la largeur de l'interstice entre l'élément composite (10) et la carrosserie.

9. Elément composite (10) selon l'une des revendications précédentes, **caractérisé en ce que** le joint d'étanchéité (16), lors de son application par moussage sur le corps de base (12), constitue l'élément d'étanchéité entre les moitiés (44, 46) du moule de moussage (42).

10. Élément composite (10) selon l'une des revendications précédentes, **caractérisé en ce que** le joint d'étanchéité (16) se compose d'un matériau élastomère tel qu'un caoutchouc mousse ou EPDM.

11. Procédé pour fabriquer un élément composite (10) selon l'une des revendications précédentes, **caractérisé en ce qu'**il consiste à :
- placer le corps de base (12) et le joint d'étanchéité (16) dans un moule de moussage (42),
- maintenir la section d'étanchéité (20) du joint d'étanchéité (16) sensiblement dans l'alignement de la surface extérieure (18) du corps de base (12),
- presser, moyennant une déformation élastique, la section de fixation (22) du joint d'étanchéité (16) contre la surface intérieure (24) du corps de base (12),
- rapporter par moussage le joint d'étanchéité (16) sur le corps d'étanchéité (12) à l'aide de la mousse de matière plastique (14), et enlever l'élément composite (10) du moule de moussage (42).

12. Procédé selon la revendication 11, selon lequel on place préalablement le joint d'étanchéité annulaire (16), moyennant une extension élastique, contre le bord (26) du corps de base (12) avant de placer le corps de base (12) et le joint d'étanchéité (16) dans le moule de moussage (42).

13. Dispositif pour fabriquer un élément composite (10) selon l'une des revendications 1 à 10 suivant le procédé selon la revendication 11 ou 12, comprenant un moule de moussage (42) qui comporte deux moitiés (44, 46) en vue de recevoir le corps de base (12) et le joint d'étanchéité (16), **caractérisé en ce que** la moitié de moule (44) qui donne une forme à la mousse de matière plastique (14) présente dans la zone du joint d'étanchéité (16) une saillie (50) qui, lorsque le moule (42) est fermé, presse la section de fixation (22) du joint d'étanchéité (16) contre la surface intérieure (24) du corps de base (12), moyennant une déformation élastique, tandis que l'autre moitié de moule (46) présente dans la zone du joint d'étanchéité (16) une section de fixation (52) qui, lorsque le moule (42) est fermé, maintient la section d'étanchéité (20) du joint (16) sensiblement dans l'alignement de la surface extérieure (18) du corps de base (12).

14. Dispositif selon la revendication 13, dans lequel l'une des moitiés (44, 46) du moule de moussage (42) présente dans la zone du joint d'étanchéité (16) un biseau (54) qui, lorsque le moule de moussage (42) est fermé, presse la section d'étanchéité (20) du joint (16) contre le bord (26) du corps de base (12).
